(19) **Europäisches Patentamt**
**European Patent Office**
**Office européen des brevets**

(11) **EP 4 460 073 A1**

(12) **EUROPEAN PATENT APPLICATION**
published in accordance with Art. 153(4) EPC

(43) Date of publication:
**06.11.2024 Bulletin 2024/45**

(21) Application number: **22915199.8**

(22) Date of filing: **30.12.2022**

(51) International Patent Classification (IPC):
**H04W 24/02** (2009.01)

(52) Cooperative Patent Classification (CPC):
**H04W 24/02**

(86) International application number:
**PCT/CN2022/144012**

(87) International publication number:
**WO 2023/125951 (06.07.2023 Gazette 2023/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.12.2021 CN 202111659285**

(71) Applicant: **VIVO MOBILE COMMUNICATION CO., LTD.**
**Dongguan, Guangdong 523863 (CN)**

(72) Inventors:
• **YANG, Ang**
  **Dongguan, Guangdong 523863 (CN)**
• **SUN, Peng**
  **Dongguan, Guangdong 523863 (CN)**
• **SUN, Bule**
  **Dongguan, Guangdong 523863 (CN)**

(74) Representative: **Lavoix**
**Bayerstraße 83**
**80335 München (DE)**

(54) **COMMUNICATION MODEL CONFIGURATION METHOD AND APPARATUS, AND COMMUNICATION DEVICE**

(57) This application discloses a communication model configuration method and apparatus, and a communication device, pertaining to the field of communication technologies. The communication model configuration method in embodiments of this application includes: obtaining, by a first communication device, artificial intelligence AI model configuration information; where the AI model configuration information includes at least one of the following: first information, where the first information is used to indicate a basic communication procedure, and the basic communication procedure includes one functional unit or at least two series-connected functional units; second information, where the second information is used to indicate a functional unit in the basic communication procedure; third information, where the third information is used to indicate an AI model module, and an AI model in the AI model module is used for executing a function of a corresponding functional unit; and fourth information, where the fourth information is used to indicate an input reference point and an output reference point of the AI model module.

201

A first communication device obtains AI model
configuration information

FIG. 2

# Description

## CROSS-REFERENCE TO RELATED APPLICATIONS

This application claims priority to Chinese Patent Application No. 202111659285.6, filed in China on December 31, 2021, which is incorporated herein by reference in its entirety.

## TECHNICAL FIELD

This application pertains to the field of communications technologies, and specifically relates to a communication model configuration method and apparatus, and a communication device.

## BACKGROUND

In communication technologies, for different communication procedures, different algorithms are used to calculate information such as results and parameters in the communication procedure. In related technologies, it is necessary to define steps, methods, and used algorithms in each communication procedure, which leads to low-degree intelligence of the communication procedures in related technologies.

## SUMMARY

Embodiments of this application provide a communication model configuration method and apparatus, and a communication device, which can improve the intelligence degree of communication procedures based on artificial intelligence (Artificial Intelligence, AI) model configuration information that is configured by using the communication model configuration method.

According to a first aspect, a communication model configuration method is provided, where the method includes:

obtaining, by a first communication device, artificial intelligence AI model configuration information; where
the AI model configuration information includes at least one of the following:

first information, where the first information is used to indicate a basic communication procedure, and the basic communication procedure includes one functional unit or at least two series-connected functional units;
second information, where the second information is used to indicate a functional unit in the basic communication procedure;
third information, where the third information is used to indicate an AI model module, and an AI model in the AI model module is used for executing a function of a corresponding functional unit; and
fourth information, where the fourth information is used to indicate an input reference point and an output reference point of the AI model module.

According to a second aspect, a communication model configuration apparatus is provided, applied to a first communication device. The apparatus includes:

a first obtaining module, configured to obtain artificial intelligence AI model configuration information; where
the AI model configuration information includes at least one of the following:

first information, where the first information is used to indicate a basic communication procedure, and the basic communication procedure includes one functional unit or at least two series-connected functional units;
second information, where the second information is used to indicate a functional unit in the basic communication procedure;
third information, where the third information is used to indicate an AI model module, and an AI model in the AI model module is used for executing a function of a corresponding functional unit; and
fourth information, where the fourth information is used to indicate an input reference point and an output reference point of the AI model module.

According to a third aspect, a communication device is provided, where the communication device includes a processor, a memory, and a program or instructions stored in the memory and capable of running on the processor, and when the program or the instructions are executed by the processor, the steps of the method according to the first aspect are implemented.

According to a fourth aspect, a communication device is provided, including a processor and a communication interface, where the communication interface is configured to obtain artificial intelligence AI model configuration information, where the AI model configuration information includes at least one of the following:

first information, where the first information is used to indicate a basic communication procedure, and the basic communication procedure includes one functional unit or at least two series-connected functional units;
second information, where the second information is used to indicate a functional unit in the basic communication procedure;
third information, where the third information is used to indicate an AI model module, and an AI model in the AI model module is used for executing a function of a corresponding functional unit; and

fourth information, where the fourth information is used to indicate an input reference point and an output reference point of the AI model module.

According to a fifth aspect, a readable storage medium is provided, where a program or instructions are stored in the readable storage medium, and when the program or the instructions are executed by a processor, the steps of the method according to the first aspect are implemented.

According to a fifth aspect, a chip is provided, where the chip includes a processor and a communication interface, the communication interface is coupled to the processor, and the processor is configured to run a program or instructions to implement the method according to the first aspect.

According to a sixth aspect, a computer program/program product is provided, where the computer program/program product is stored in a storage medium, and the computer program/program product is executed by at least one processor to implement the steps of the communication model configuration method according to the first aspect.

In the embodiments of this application, the first communication device obtains artificial intelligence AI model configuration information; where the AI model configuration information includes at least one of the following: first information, where the first information is used to indicate a basic communication procedure, and the basic communication procedure includes one functional unit or at least two series-connected functional units; second information, where the second information is used to indicate a functional unit in the basic communication procedure; third information, where the third information is used to indicate an AI model module, and an AI model in the AI model module is used for executing a function of a corresponding functional unit; and fourth information, where the fourth information is used to indicate an input reference point and an output reference point of the AI model module. According to the AI model configuration information, the first communication device can know information such as the basic communication procedure, the functional units in the basic communication procedure, the AI model module for executing the functions of the corresponding functional units, and the input reference point and output reference point of the AI model module. For example, when needing to execute a basic communication procedure or function, the first communication device can determine, based on the foregoing AI model configuration information, an AI model capable of completing the foregoing basic communication procedure or function, so as to implement the basic communication procedure or function by using the AI model. This helps reduce configuration processes required for configuring steps, execution methods, and used algorithms for each basic communication procedure and function in related technologies, so as to improve an intelligence degree of the communication system.

**BRIEF DESCRIPTION OF DRAWINGS**

FIG. 1 is a block diagram of a wireless communication system to which the embodiments of this application are applicable;

FIG. 2 is a flowchart of a communication model configuration method according to an embodiment of this application;

FIG. 3 is a schematic diagram of an architecture of a neural network model;

FIG. 4 is a schematic diagram of a neuron;

FIG. 5 is a schematic structural diagram of a communication model configuration apparatus according to an embodiment of this application;

FIG. 6 is a schematic structural diagram of a communication device according to an embodiment of this application;

FIG. 7 is a schematic structural diagram of a terminal according to an embodiment of this application; and

FIG. 8 is a schematic structural diagram of a network-side device according to an embodiment of this application.

**DESCRIPTION OF EMBODIMENTS**

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

In the specification and claims of this application, the terms such as "first" and "second" are intended to distinguish between similar objects but do not necessarily indicate a specific order or sequence. It should be understood that the terms used in this way is interchangeable in appropriate circumstances so that the embodiments of this application can be implemented in other orders than the order illustrated or described herein, and "first" and "second" are usually for distinguishing same-type objects but not limiting the number of objects, for example, there may be one or more first objects. In addition, "and/or" in this specification and claims indicates at least one of connected objects, and the symbol "/" generally indicates that the associated objects are in an "or" relationship.

It should be noted that techniques described in the embodiments of this application are not limited to a long term evolution (Long Term Evolution, LTE) or LTE-advanced (LTE-Advanced, LTE-A) system, and may also be applied to various wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6th Generation, 6G) communication system.

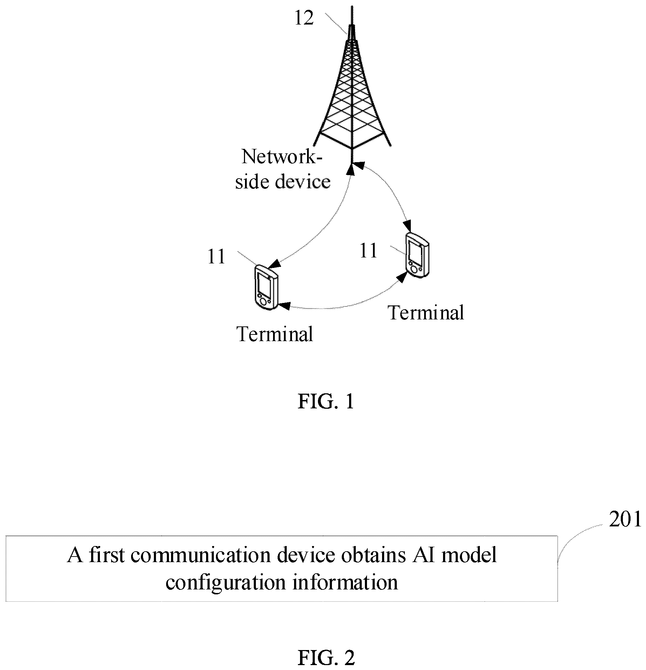

FIG. 1 is a block diagram of a wireless communication system to which the embodiments of this application are applicable. The wireless communication system includes a terminal 11 and a network-side device 12. The terminal 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home device (a home device with wireless communication function, such as a refrigerator, a television, a washing machine, or a furniture), a game console, a personal computer (personal computer, PC), a teller machine, a self-service machine, or the like. The wearable device includes: a smart watch, a wrist band, smart earphones, smart glasses, smart jewelry (smart bracelet, smart wristband, smart ring, smart necklace, smart anklet, smart ankle bracelet, or the like), smart wristband, smart clothing, and the like. It should be noted that a specific type of the terminal 11 is not limited in the embodiments of this application. The network-side device 12 may include an access network device or a core network device, where the access network device may also be referred to as a radio access network device, a radio access network (Radio Access Network, RAN), a radio access network function, or a radio access network unit. The access network device may include a base station, a wireless local area network (Wireless Local Area Networks, WLAN) access point, a wireless fidelity Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application service discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application Function (Application Function, AF), and the like. It should be noted that, in the embodiments of this application, a core network device in an NR system is used as an example for description, and a specific type of the core network device is not limited.

With reference to the accompanying drawings, the following describes in detail, by using some embodiments and application scenarios thereof, a communication model configuration method, a communication model configuration apparatus, and a communication device provided in the embodiments of this application.

Referring to FIG. 2, an embodiment of this application provides a communication model configuration method, which can be applied to a first communication device. The first communication device may be a terminal or a network-side device, which is not specifically limited herein. As shown in FIG. 2, the communication model configuration method may include the following step.

Step 201: A first communication device obtains AI model configuration information; where the AI model configuration information includes at least one of the following:

first information, where the first information is used to indicate a basic communication procedure, and the basic communication procedure includes one functional unit or at least two series-connected functional units;

second information, where the second information is used to indicate a functional unit in the basic communication procedure;

third information, where the third information is used to indicate an AI model module, and an AI model in the AI model module is used for executing a function of a corresponding functional unit; and

fourth information, where the fourth information is used to indicate an input reference point and an output reference point of the AI model module.

In implementation, the first communication device obtaining the AI model configuration information may include:

Case 1:

In a case that the first communication device is a network-side device, the network-side device may obtain the AI model configuration information in at least one of the following manners:

the AI model configuration information being delivered by a network side higher layer (such as a core network);
the AI model configuration information being specified by a communication protocol; and
the AI model configuration information being reported by a terminal.

Case 2:

In a case that the first communication device is a terminal, the terminal may obtain the AI model configuration information in at least one of the following manners:

the AI model configuration information being delivered by the network-side device;
the AI model configuration information being specified by the communication protocol; and
the AI model configuration information being independently determined by the terminal, where for example, the AI model configuration information is pre-configured at a factory stage of the terminal, or the terminal selects the AI model configuration information according to its own capability information.

The first information may be used to indicate an identifier of the corresponding basic communication procedure, such as a name or a type, or certainly, may include identification information and a series-connection order of at least two series-connected functional units corresponding to the basic communication procedure. In this way, after the basic communication procedure is determined, a functional unit capable of completing the basic communication procedure can be determined based on the identification information of the at least two series-connected functional units corresponding to the basic communication procedure.

In implementation, one basic communication procedure can usually include at least two series-connected functional units, where each functional unit can correspond to its own AI model module, so as to implement a corresponding function of the functional unit by using the AI model module of the functional unit, for example, first using an AI model module A to execute a function A, and then using an AI model module B to execute a function B based on an execution result of the function A.

Certainly, in some cases, there may be only one functional unit in the basic communication procedure. For example, a specific basic communication procedure includes a function A and a function B, but the function A is implemented in a non-AI mode specified in the protocol. In this way, the basic communication procedure can be implemented only by combining an AI model module of one functional unit corresponding to the function B with the function B implemented in the non-AI mode specified in the protocol. In this case, the AI model configuration information may configure only a functional unit corresponding to the function B in the basic communication procedure. For another example, a specific basic communication procedure includes only a function A, so the basic communication procedure can be implemented only by using an AI model module of a functional unit corresponding to the function A.

Optionally, a type of the basic communication procedure includes at least one of the following: physical layer communication procedure, medium access control (Medium Access Control, MAC) layer communication procedure, and higher layer communication procedure.

Using the physical layer communication procedure as an example, the basic communication procedure may include at least one of the following:
control channel reception, initial access, random access, shared channel reception, control channel transmission, data channel transmission, reference signal reception, and reference signal transmission.

It should be noted that the foregoing basic communication procedures can include other physical layer communication procedures such as positioning, in addition to the physical layer communication procedures listed above, which is not described one by one herein.

For the second information, the second information can be used to indicate identification information of a corresponding functional unit and/or description information of the function/usage/procedure corresponding to the functional unit, for example, the second information includes description information of a function of the functional unit and a corresponding basic communication procedure.

Optionally, the functional unit includes at least one of the following:

coding, interleaving, modulation, resource mapping, multi-antenna precoding (multi-antenna precoding), fast Fourier transform (Fast Fourier Transform, FFT)/inverse fast Fourier transform (Inverse Fast Fourier Transform, IFFT), domain transforming, channel estimation, and signal estimation and equalization.

It should be noted that each basic communication procedure can correspond to its own functional unit, and functional units participating in different basic communication procedures can be different, and depending on the different basic communication procedures, the functional units are not limited to the types listed above, which is not specifically limited herein. In implementation, a connection point between functional units is referred to as a reference point. For example, if two functional units are connected in series in sequence: radio frequency -> domain transforming, output of radio frequency and input of domain transforming are a same reference point.

For the third information, the third information may be used to indicate the identification information of the corresponding AI model module or the third information may also include the identification information of each AI model in the corresponding AI model module. In addition, the third information may also indicate an association between the AI model module and the functional unit, for example one AI model module is used to complete the modulation function; and another AI model module is used to complete the functions of modulation + resource mapping. For another example, assuming that a function of a functional unit is jointly completed by a first AI model module and a second AI model module, the third information may include: an association between the functional unit and the first AI model module, and an association between the functional unit and the second AI model module. In this way, during determining of the function corresponding to the functional unit that needs to be executed, the first communication device may determine that the first AI model module and the second AI model module are used to execute the function of the functional unit based on the association.

Certainly, in implementation, it is also possible to associate one AI model module with at least two functional units, that is, one AI model module is capable of implementing functions of at least two functional units. For an association between an AI model module and a functional unit, one AI model module may correspond to one or at least two functional units, or one functional unit may correspond to at least two AI model modules.

That is, a correspondence between the AI model module and the functional unit may include at least one of the following:

　　　one AI model module corresponds to at least one functional unit; and
　　　one functional unit corresponds to at least one AI model module.

For example, the modulation function is composed of three AI model modules connected in series. AI model module 1 selects a constellation format/pattern (pattern), AI model module 2 selects a constellation point (that is, a specific constellation point is selected from the selected constellation pattern according to input data), and AI model module 3 performs amplitude processing and phase processing on the constellation point.

The correspondence between the AI model module and the functional unit is not specifically limited herein.

For the fourth information, the fourth information may indicate an input-output relationship between any AI model modules. For example, assuming that an output result of a first AI model module is an input parameter of a second AI model module, an output reference point of the first AI model module is an input reference point of the second AI model module. The fourth information defines the input reference point and output reference point of the AI model module, so as to clarify the input-output relationship between the AI model modules.

In implementation, at least one AI model may be included in the AI model module, and in a case that at least two AI models are included in the AI model module, the third information includes description information of each AI model in the AI model module, or may include an input/output relationship between any AI models in the AI model module. For ease of description, in the following embodiments, an example where each AI model module includes one AI model is used for description, which does not constitute any specific limitation herein.

It should be noted that the AI model may include a plurality of types of AI algorithm modules, such as neural network, decision tree, support vector machine, and Bayesian classifier, which is not specifically limited herein. For ease of description, in the following embodiments, an example where the AI algorithm model includes a neural network model is used for description, which does not constitute any specific limitation herein.

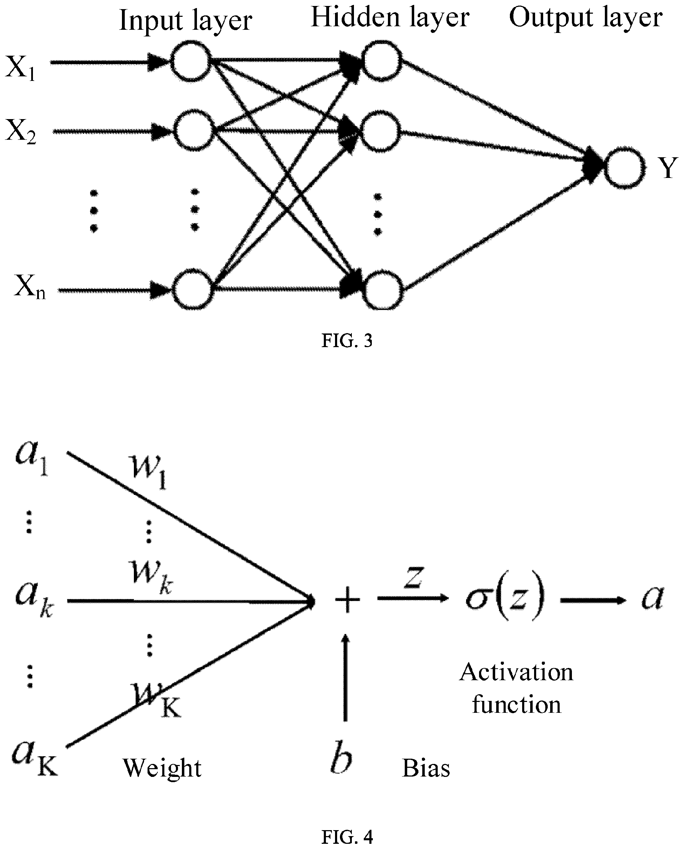

As shown in FIG. 3, the neural network model includes an input layer, a hidden layer, and an output layer, which can predict a possible output result (Y) based on discrepancy information ($X_1$ to $X_n$) obtained by the input layer. The neural network model is formed by a large number of neurons. As shown in FIG. 4, parameters of the neurons include: input parameters $a_i$ to $a_K$, weight w, bias b, and activation function $\sigma(z)$, and an output value a is obtained from these parameters. Common activation functions include an S-shaped growth curve (Sigmoid) function, a hyperbolic tangent (tanh) function, a rectified linear unit (Rectified Linear Unit, ReLU, also referred to as corrected linear unit) function, and so on. z in the above function $\sigma(z)$ can be calculated by the following formula:

$$z = a_1 w_1 + \cdots + a_k w_k + a_K w_K + b$$

where, K represents the total number of input parameters.

Parameters of the neural network are optimized using an optimization algorithm. The optimization algorithm is a type of algorithm that can help minimize or maximize an objective function (sometimes referred to as loss function). The objective function is usually a mathematical combination of model parameters and data. For example, given data X and its corresponding label Y, a neural network model f(.) may be constructed. After the neural network model is constructed, a predicted output f(x) can be obtained based on an input x, and a difference (f(x)-Y) between a predicted value and a true value can be calculated, which is referred to as a loss function. Appropriate W and b may be found to minimize a value of the loss function. A smaller loss value indicates that the model is closer to reality.

Current common optimization algorithms are basically based on an error back propagation algorithm. The basic idea of the error back propagation algorithm is that the learning process consists of two phases: forward propagation of signals and backward propagation of errors. During forward propagation, input samples are passed from an input layer through each hidden layer, and then to an output layer. If an actual output of the output layer does not match an expected output, the process enters the phase of error backward propagation. Error backward propagation involves propagating an output error back through the hidden layers to the input layer in some forms, and distributing the error among all units at each layer, to obtain error signals for the units at each layer. The error signals are then used as a basis for adjusting a weight of each unit. This process of signal forward propagation and error backward propagation for weight adjustment at all layers is repeated iteratively. The process of continuously adjusting weights is a learning and training process of the neural network. This process continues until an error in the network output is reduced to an acceptable level or until a pre-determined number of learning times is reached.

Common optimization algorithms include gradient descent (Gradient Descent), stochastic gradient descent (Stochastic Gradient Descent, SGD), mini-batch gradient descent (mini-batch Gradient Descent), momentum (Momentum), Nesterov (indicating stochastic gradient descent with momentum), adaptive gradient descent (Adaptive GRADient descent, Adagrad), adaptive learning rate algorithm (Adadelta), root mean square prop (Root Mean Square prop, RMSprop), adaptive moment estimation (Adaptive Moment Estimation, Adam), and the like.

During error backward propagation in the optimization algorithms, the error/loss is obtained based on the loss function, and a derivative/partial derivative of the current neuron is calculated, taking into account factors such as learning rate, previous gradients/derivatives/partial derivatives, to obtain the gradient, and then the gradient is passed to an upper layer.

In implementation, based on the basic communication procedure that needs to be executed, the first terminal may determine at least two series-connected functional units included in the basic communication procedure, so as to determine an AI model module corresponding to each functional unit based on identification information or function description information of the at least two series-connected functional units, and further determine an input-output relationship between the AI model modules according to a series-connection sequence between functional units and/or input/output reference points between the AI model modules. For example, output information of an AI model module corresponding to a previous functional unit in two adjacent functional units is used as input information of an AI model module corresponding to a next functional unit, so as to sequentially execute functions of functional units according to a series-connection sequence of the at least two series-connected functional units, thereby implementing all or at least part of the basic communication procedure.

It should be noted that the basic communication procedure may further include one or part of non-AI functional units. The non-AI functional unit may be configured (as specified in the protocol) and executed by the existing configuration method, that is, the non-AI functional unit may not have a corresponding AI model module, and be connected in series to a corresponding AI model module of the functional unit after the non-AI functional unit; or may be started after the first communication device completes executing the function corresponding to the non-AI functional unit; or if the function corresponding to the non-AI functional unit has not been completed within a preset time length, skip the function corresponding to the non-AI functional unit and execute the function corresponding to the subsequent functional unit. Certainly, if the function corresponding to the non-AI functional unit has not been completed within the preset time length, it is also possible to skip all or part of the subsequent steps of the basic communication procedure and declare the basic communication procedure failed, which is not specifically limited herein.

In an optional implementation, the communication model configuration method provided in this embodiment of the application further includes:
receiving, by the first communication device, update signaling and updating third information of a first AI model module in the AI model configuration information according to the update signaling, where the update signaling carries at least one of the following information:

first sub-information, where the first sub-information is used to indicate model reconfiguration information (model_reconfiguration) of the first AI model module; second sub-information, where the second sub-information is used to indicate a first input reference point and a first output reference point of the first AI model module; and

third sub-information, where the third sub-information is used to indicate performing data processing on the first input reference point so as to obtain neural network information of the first output reference point.

In this implementation, the first AI model module may be replaced or updated by model_reconfiguration.

The second sub-information may indicate the first input reference point corresponding to the input (input) of the first AI model module and the first output reference point corresponding to the output (output) of the first AI model module, so that the first AI model module can be embedded into the corresponding basic communication procedure based on the first input reference point and the first output reference point. For example, if the identifier of the first input reference point and the identifier of the first output reference point are included in the model_reconfiguration, which AI model module in the basis communication procedure needs to be updated/replaced can be known.

The AI model (neural network) in the AI model module can be updated through the third sub-information, that is, the third sub-information may indicate to the first AI model module how to obtain the output of the neural network information through processing on the input.

In an optional implementation, after the step 201, the communication model configuration method provided in this embodiment of the application further includes:

obtaining, by the first communication device, communication requirement information;
determining, by the first communication device based on target information, a target AI model matching the communication requirement information, where the target information includes the AI model configuration information; and
executing, by the first communication device based on the target AI model, a target communication procedure corresponding to the communication requirement information or executing a function of a target functional unit corresponding to the communication requirement information.

In implementation, the first communication device may determine, based on the obtained communication requirement information, that the target communication procedure needs to be executed, and then determine at least two functional units included in the target communication procedure, so as to determine that the target AI model includes AI models in each AI model module corresponding to the at least two functional units included in the target communication procedure.

Certainly, in implementation, the first communication device may alternatively determine, based on the obtained communication requirement information, that the target function needs to be executed; and in this case, the target AI model may include AI models in a target AI model module corresponding to a target functional unit capable of implementing the target function.

In this implementation, the first communication device may determine, based on the obtained communication requirement information, a target AI model that can meet the communication requirement information, and use the target AI model to execute the target communication procedure corresponding to the communication requirement information or the function of the target functional unit corresponding to the communication requirement information. This can reduce configuration processes during execution of a process meeting the communication requirement information. For example, in the related art, when obtaining one piece of communication requirement information, the network-side device usually needs to obtain capability information and status information reported by a base station and/or a terminal; determines, based on the communication requirement information and the information of the base station and/or the terminal, a terminal and/or a base station that can meet the communication requirement information; and then send configuration information to the terminal and/or the base station, so that the terminal and/or the base station can perform corresponding interaction and/or functions, and the like. In this embodiment of this application, when the base station and/or the terminal obtains the communication requirement information, the base station and/or the terminal can determine a corresponding basic communication procedure or function based on the communication requirement information, so as to use a corresponding AI model to execute the basic communication procedure or function.

In implementation, the communication requirement information can be understood as information that the network side and/or the base station and/or the terminal needs to perform a communication event/action. The device that obtains the communication requirement information can determine, based on the communication requirement information, a basic communication procedure and/or functional unit corresponding to the communication event/action to be executed. The communication requirement information is, for example, that the terminal needs to perform initial access, the terminal needs to access/switch to a cell, the terminal needs to upload data, the terminal needs to download data, the terminal needs to call another terminal, the base station needs to call a terminal, and so on, which is not described one by one herein.

In an optional implementation, the communication model configuration method provided in this embodiment of the application further includes:

obtaining, by the first communication device, first configuration information of the target AI model, where the target information further includes the first configuration information, and the first configuration information includes at least one of the following:

at least one of a structure, a parameter, and a coefficient of the AI model;
reference point information;
functional unit information; and
AI model module information; where
the reference point information, the functional unit information, and the AI model module information are related.

The reference points may include an input reference point and an output reference point, and the input-output relationship between the AI model modules can be known based on the input reference point and the output reference point. The functional unit information may be an identifier of a functional unit, function description, an association between AI model modules, and so on. The AI model module information may include identification information of the AI model module, and model content and/or an identifier of the AI model contained therein, or may include an association between the AI model module and the corresponding functional unit.

It should be noted that the reference point information, the functional unit information, and the AI model module information are related, which can be expressed as: if any one of the reference point information, the functional unit information and the AI model module information is known, the other two can be deduced.

Optionally, the reference point information includes at least one of the following information:

reference point identifier;
topological relationship of reference points;
data format corresponding to a position of a reference point in a communication procedure;
physical meaning of information corresponding to the position of the reference point in the communication procedure; and
information of an AI model module connected to the reference point.

In implementation, similar to a manner that the first communication device obtains the AI model configuration information, the first communication device may obtain the first configuration information based on a manner of being sent by the network-side device, being specified by the protocol, or being reported by the terminal, which is not repeated herein.

Option 1: The reference point identifier is used to identify each reference point in the AI model configuration information.

Option 2: The topological relationship of the reference points can be used to express a connection relationship between reference points, for example, information about a previous reference point and/or a next reference point to which the target reference point is respectively connected, where the target reference point and the previous reference point are respectively used as the output reference point (target reference point) and the input reference point (previous reference point) of the previous one of the two AI model modules sequentially connected in series, and the target reference point and the next reference point are respectively used as the input reference point (target reference point) and the output reference point (previous reference point) of the next one of the two AI model modules sequentially connected in series.

For example, if there are four reference points, namely, A, B, C, and D, the topological relationship of the reference points can be defined as A-B-C-D. Thus, according to the topological relationship of the reference points, an input-output relationship between AI models connected to the reference points and a series-connection order between functional units corresponding to the AI models can be known.

In practical application, if any one of the reference point information, functional unit information, and module information is known, information about the remaining two can be deduced.

Option 3: The data format corresponding to the position of the reference point in the communication procedure represents a data format of the position of the reference point in the actual communication procedure. In practical application, interaction may be performed based on different data formats according to different positions in the communication procedure. In this case, the data format of the reference point at the current position can be clarified by using the foregoing option 3 to avoid data confusion of different data formats.

Option 4: Physical meaning of the information corresponding to the position of the reference point in the communication procedure, for example, physical meaning of the input parameter corresponding to the input reference point and physical meaning of the output parameter corresponding to the output reference point. Based on the physical meaning of the information corresponding to the reference point, the physical meanings of the input parameter and output parameter of each AI model are further clarified, thus improving data processing reliability of the AI model.

It should be noted that the above option 4 can be ignored in some scenarios. For example, when the reference point is a reference point (first-type reference point) pre-configured or specified in the communication protocol, related information of the reference point, such as the topological structure, the data format, the reference point identifier, and the physical meaning corresponding to the position of the reference point in the communication procedure, has been known according to the pre-configuration or the communication protocol. In this case, it is not necessary to configure the information in the above options 2 to 4 again through the first configuration information. For another example, for a reference point with clear input data format and clear output data format, and/or a reference point with complete and clear connected AI model information (in this case, the input data format/output data format of the AI model can be deduced based on the AI model information), the configuration information corresponding to the above option 3 can be omitted.

For another example, first configuration information of a reference point that satisfies at least one of the following may not include the option 4:

a reference point with clear input data format and clear output data format;
a reference point with known complete information of the connected AI model; and
a reference point with known configuration information or physical meaning of a target AI model module and/or a target functional unit, where the target AI model module is an AI model module between the reference point and a previous reference point and/or an AI model module between the reference point and a next reference point, and the target functional unit is a functional unit corresponding to the target AI model module.

In a case that the complete information of the AI model connected with the reference point, or the configuration information of the target AI model module, or the configuration information of the target functional unit is known, the configuration information of the reference point can be deduced based on the complete information of the AI model connected with the reference point, or the configuration information of the target AI model module, or the configuration information of the target functional unit, not requiring repeated configuration or reporting.

Option 5: The AI model module connected with the reference point may include the previous AI model module connected with the reference point (that is, the AI model module with the reference point being the output reference point) and the next AI model module connected with the reference point (that is, the AI model module with the reference point being the input reference point). The AI model module information may include the information about the AI model module, the AI model configuration information module, the physical meaning of the AI model module, and the like, which is not listed herein.

It should be noted that in practical application, the first configuration information of part of reference points can be determined in a manner of being pre-configured or being specified by the communication protocol, and in subsequent application, reference points and/or AI models can be added in a manner of network configuration according to actual communication requirements. For ease of description, the reference points pre-configured or specified by the communication protocol are referred to as first-type reference points and the newly added reference points are referred to as second-type reference points in the following embodiments.

In practical application, for the first-type reference points, the corresponding first configuration information merely needs to include the first-type reference point identifiers. In other words, the topological relationship that is between reference points corresponding to the identifiers and that is pre-configured or specified in the communication protocol, the data format and physical meaning corresponding to the position in the communication procedure, and the information of the connected AI model modules can be obtained based on the first-type reference point identifiers.

For the second-type reference points, the corresponding first configuration information may include the second-type reference point identifiers and the topological relationship between the reference points. Certainly, according to needs of actual application scenarios, the first configuration information corresponding to the second-type reference points may alternatively include the data format and/or physical meaning corresponding to the positions of the second-type reference points in the communication procedure, and/or may also include the information about the AI model module connected to the second-type reference point, which is not specifically limited herein.

Optionally, in implementation, when the first-type reference point is not used, the information (an identifier, a data format, a physical meaning, or the like) about the first-type reference point may not be deleted, that is, when the reference points between AI model modules corresponding to the basic communication procedure and/or functional unit that corresponds to the communication requirement information do not include the first target reference point, the first target reference point is an unused reference point, and in this case, the information of the first target reference point may be retained. For example, assuming that the original basic communication procedure includes the first-type reference points: A-B-C, if the second-type reference points D and E are added and the topological relationship between the reference points is changed to A-D-E-C, the first-type reference point B is not used in the basic communication procedure, and related information of the first-type reference point B is not deleted.

In this implementation, for the first-type reference points pre-configured or specified in the communication protocol, the related information of the first-type reference points not being used is kept all the time. In this case, when functions corresponding to other basic communication procedures and/or functional units are subsequently executed, other information of the first-type reference points can be obtained only by obtaining the identifiers of the corresponding first-type reference points.

Optionally, in implementation, when the second-type reference point is not used, the information (an identifier, a data format, a physical meaning, or the like) about the second-type reference point may not be deleted, that is, when the reference points between AI model modules corresponding to the basic communication procedure and/or functional unit that corresponds to the communication requirement information do not include the second target reference point, the second reference point is an unused reference point, and in this case, the information of the second target reference point may be deleted. For example, assuming that the network-side device adds the second-type reference points D and E to the original basic communication procedure, and if a new basic communication procedure is started according to another communication requirement information after the basic communication procedure is completed, and the new basic communication procedure does not include the second-type reference points D and E, the related information of the second-type reference points D and E can be deleted.

In this implementation, the network-side device can add the second-type reference points to the basic communication procedure, and after the current basic communication procedure is completed, the related information of the second-type reference points can be deleted, so that storage space occupied by the second-type reference points added by the network-side device in the basic communication procedure in a specific application scenario can be reduced.

It should be noted that the second-type reference points may be added by the network-side device, or may be added by the terminal. After adding the second-type reference points, the terminal may report information related to the second-type reference points (such as an identifier, and the physical meaning and/or data format in the communication procedure) to the network-side device, which is not specifically limited herein.

In addition, whether to delete the related information of the first-type reference points and/or second-type reference points being not used or to keep such related information can be determined according to an actual application scenario. For example, if the storage space of the terminal is very limited, the terminal can delete the related information of the unused first-type reference points, and if the storage space of the terminal is sufficient, the terminal may alternatively not delete the related information of the unused second-type reference points, which is not specifically limited herein.

In an optional implementation, in a case that the basic communication procedure includes control channel reception, the basic communication procedure includes at least one of the following sequentially series-connected functional units:

radio frequency, domain transforming, resource mapping (de-mapping), demodulation (demodulation)/decoding (decoding), obtaining of control information, and determining of a behavior indicated by the control information, or determining of a physical layer procedure triggered by the control information.

In implementation, the control information may include at least one of downlink control information (Downlink Control Information, DCI), uplink control information (Uplink Control Information, UCI) and output profile (output_profile). In practical application, other types of control information may alternatively be included according to different application scenarios, which is not specifically limited herein.

The domain transforming may include at least one of IFFT/FFT and orthogonal time frequency space (Orthogonal Time Frequency Space, OTFS) correlation transform.

In some embodiments, functional units in control channel reception can be connected in series in the order of radio frequency -> domain transforming -> resource mapping -> demodulation/decoding -> obtaining of control information -> determining of a behavior indicated by the control information or determining of a physical layer procedure triggered by the control information.

It should be noted that, according to the actual application scenario, the terminal and/or the network-side device executing the basic communication procedure has different capabilities or states, and the arrangement order and the number of functional units in the basic communication procedure for control channel reception may change. For example, functions of one or some functional units are implemented by using a non-AI model algorithm, so it is not limited that the basic communication procedure for control channel reception needs to include all the functional units mentioned above, nor that all functional units need to be arranged in strict accordance with the above order.

In an optional implementation, the control information includes at least two pieces of sub-information, and each piece of sub-information is used to indicate respective information/signaling, or all the sub-information in the control information constitutes an information group/signaling group; and/or

information/signaling in the control information is used to represent feedback information or first indication information of a triggered physical layer procedure, and the first indication information is used to indicate at least one of the following: target behavior, resource configuration of the target behavior, hyper-parameter of the target behavior, updating of the AI model configuration information, and updating of a hyper-parameter in the AI model configuration information.

In implementation, one piece of control information may include at least two pieces of sub-information, and each piece of sub-information is used to indicate one piece of signaling/information; or one piece of control information is one piece of signaling/information. In this case, whether the control information includes at least two pieces of sub-information corresponding to at least two pieces of signaling/information or the control information itself is one piece of signaling/information, the signaling/information can be used to represent feedback information or the first indication information of the triggered physical layer procedure, which is not specifically limited herein.

In addition, the feedback information may be acknowledgement (Acknowledgement, ACK)/negative acknowledgement (Negative Acknowledgement, NACK) in the basic communication procedure for control channel reception, or ACK/NACK in the basic communication procedure for shared channel reception, or channel state information (Channel State Information, CSI), or the like, which is not described one by one herein.

The target behavior may include at least one of the following: receiving a control channel (for example, physical downlink control channel (Physical downlink control channel, PDCCH)), sending a control channel (for example, physical uplink control channel (Physical Uplink Control Channel, PUCCH)), receiving a shared channel (for example, physical downlink shared channel (Physical downlink shared channel, PDSCH)), sending a shared channel (for example, physical uplink shared channel (Physical Uplink Shared Channel, PUSCH)), receiving a reference signal, and sending a reference signal.

Corresponding to the target behavior, resources in a resource configuration of the target behavior may include at least one of the following: time domain resource, frequency domain resource, spatial domain resource, port resource, delay domain resource, and Doppler domain resource.

In addition, hyper-parameters (hyper-parameters) of the target behavior are related to hyper-parameters of the functional unit executing the target behavior, that is, the hyper-parameters of the target behavior affect the hyper-parameters of the functional unit executing the target behavior. For example, assuming that the target behavior is sending a sounding reference signal (Sounding Reference Signal, SRS), the hyper-parameters of the target behavior may be hyper-parameters of the AI model corresponding to the functional unit for performing SRS transmission.

In this implementation, the control information includes at least two pieces of signaling/information, or a group of signaling/information, or one piece of signaling/information, and each piece of signaling/information can be used to carry feedback information or first indication information, so that the behavior indicated by the control information or the physical layer procedure triggered by the control information can be determined according to the signaling/information included in the control information.

In an optional implementation, in a case that the basic communication procedure includes initial access, the basic communication procedure includes at least one of the following series-connected functional units:
radio frequency, synchronous channel (PSS/SSS) search/detection, physical broadcast channel (Physical broadcast channel, PBCH) reception, system information reception, and random access.

In implementation, an arrangement order of the functional units in the basic communication procedure for initial access may be: radio frequency -> synchronous channel search/detection -> physical broadcast channel (Physical broadcast channel, PBCH) reception -> system information reception -> random access.

The synchronization channel may include a primary synchronization signal (Primary Synchronization Signal, PSS) and/or a secondary synchronization signal (Secondary Synchronization Signal, SSS). The synchronous signal search/detection may include: using an output of the radio frequency as an input of the synchronous channel search/detection, and using a searched physical cell identifier (Physical Cell Identifier, PCI) as one of the outputs (RF output as input for the search and with searched PCI as one of the output). The output of synchronization signal search/detection may also include parameters such as frequency, doppler, and Rx (transmit) timing window (The output would be a profile including frequency, doppler, Rx timing window etc.), which is not specifically limited herein.

For the functional units for PBCH reception, the signal processing chain concatenates several AI model modules defined previously with output profile for the next step (signal processing chain concatenating several modules defined previously with output profile for the next step).

For the functional unit for system information reception, the system information may include at least one of master information block (Master Information Block, MIB), system information block (System Information Block, SIB) 1, and SIB2, and configuration information of the SIB may be obtained through the MIB, so as to implement SIB reception.

It should be noted that, similar to the basic communication procedure for control channel reception, the arrangement order and the number of functional units in the basic communication procedure for initial access may change according to the actual application scenario, different capabilities or states of the terminal and/or network-side device executing the basic communication procedure, and the like. It is not limited that the basic communication procedure for initial access needs to include all the functional units mentioned above, nor that all functional units need to be arranged in strict accordance with the above order.

In an optional implementation, in a case that the basic communication procedure includes random access, the basic communication procedure includes at least one of the following sequentially series-connected functional units:
obtaining of random access preamble (preamble), obtaining of random access feedback (response), scheduled transmission (scheduled transmission), and contention resolution (contention resolution).

In implementation, the arrangement order of functional units in the basic communication procedure for random access can be: obtaining of random access preamble -> obtaining of random access feedback -> scheduled transmission and reception -> contention resolution.

Certainly, similar to the basic communication procedure for control channel reception, the arrangement order and the number of functional units in the basic communication procedure for random access may change according to the actual application scenario, different capabilities or states of the terminal and/or network-side device executing the basic communication procedure, and the like. It is not limited that the basic communication procedure for random access needs to include all the functional units mentioned above, nor that all functional units need to be arranged in strict accordance with the above order.

In an optional implementation, in a case that the basic communication procedure includes positioning, the basic communication procedure includes at least one of the following series-connected functional units:

positioning reference signal reception, signal processing or signal estimation, obtaining/generating of positioning related information, positioning related information transmission or positioning reference signal reception, signal processing or signal estimation, obtaining of positioning intermediate information, obtaining of position information, and position information transmission.

In implementation, the arrangement order of functional units in the basic communication procedure for positioning can be: positioning reference signal reception -> signal processing or signal estimation -> obtaining/generating of positioning related information -> positioning related information transmission or positioning reference signal reception -> signal processing or signal estimation -> obtaining of positioning intermediate information -> obtaining of position information -> position information transmission.

The positioning related information includes position information and/or intermediate information, and the intermediate information may include at least one of the following:

timing (Timing), time of arrival (Timing of arrival, TOA), round-trip time (Round-Trip Time, RTT), observed time difference of arrival (Observed Time Difference of Arrival, OTDOA), time difference of arrival (Time Difference of Arrival, TDOA), angle of arrival (Angle of arrival, AOA) and angle of departure (Angle of departure, AOD).

It should be noted that, similar to the foregoing basic communication procedure for control channel reception, the arrangement order and the number of functional units in the basic communication procedure may change according to the actual application scenario, different capabilities or states of the terminal and/or network-side device executing the basic communication procedure, and the like. For example, the basic communication procedure for positioning may include at least one of the following series-connected functional units: positioning reference signal reception, signal processing or signal estimation, obtaining/generating of positioning related information, obtaining of position information, and position information transmission. Herein, it is not limited that the basic communication procedure for positioning needs to include all the functional units mentioned above, nor that all functional units need to be arranged in strict accordance with the above order.

In an optional implementation, in a case that the basic communication procedure includes shared channel reception, the basic communication procedure includes at least one of the following series-connected functional units:

obtaining of control information, radio frequency unit, channel estimation or equalization, domain transforming, resource mapping, and demodulation or decoding.

In implementation, an arrangement order of the functional units in the basic communication procedure for shared channel reception can be: obtaining of control information -> radio frequency -> channel estimation or equalization -> domain transforming -> resource mapping -> demodulation/decoding (demodulation/decoding).

Certainly, similar to the basic communication procedure for control channel reception, the arrangement order and the number of functional units in the basic communication procedure for shared channel reception may change according to the actual application scenario, different capabilities or states of the terminal and/or network-side device executing the basic communication procedure, and the like. It is not limited that the basic communication procedure for shared channel reception needs to include all the functional units mentioned above, nor that all functional units need to be arranged in strict accordance with the above order.

In an optional implementation, in a case that the basic communication procedure includes control channel transmission, the basic communication procedure includes at least one of the following series-connected functional units:

obtaining of signaling, coding or interleaving or modulation, resource mapping, domain transforming, and radio frequency unit.

In implementation, an arrangement order of the functional units in the basic communication procedure for control channel transmission can be: obtaining of signaling -> coding or interleaving or modulation -> resource mapping -> domain transforming -> radio frequency.

The above signaling may include control signaling carried by a control channel, and the obtaining of signaling may be generation of signaling or obtaining of signaling sent by a higher layer, which is not specifically limited herein.

It should be noted that, similar to the basic communication procedure for control channel reception, the arrangement order and the number of functional units in the basic communication procedure for control channel transmission may change according to the actual application scenario, different capabilities or states of the terminal and/or network-side device executing the basic communication procedure, and the like. It is not limited that the basic communication procedure for control channel transmission needs to include all the functional units mentioned above, nor that all functional units need to be arranged in strict accordance with the above order.

In an optional implementation, in a case that the basic communication procedure includes data channel transmission, the basic communication procedure includes at least one of the following series-connected functional units:

obtaining of data, coding or interleaving or modulation, resource mapping, domain transforming, and radio frequency unit.

In implementation, an arrangement order of the functional units in the basic communication procedure for data channel transmission can be: obtaining of data -> coding or interleaving or modulation -> resource mapping -> domain transforming -> radio frequency.

A difference between this implementation and the foregoing basic communication procedure for control channel transmission lies in that this implementation is a basic communication procedure of data transmission, and data to be sent may be data generated by the first communication device, data obtained by other means, data stored in advance, or the like, which is not specifically limited herein.

It should be noted that, similar to the basic communication procedure for control channel reception, the arrangement order and the number of functional units in the basic communication procedure for data channel transmission may change according to the actual application scenario, different capabilities or states of the terminal and/or network-side device executing the basic communication procedure, and the like. It is not limited that the basic communication procedure for data channel transmission needs to include all the functional units mentioned above, nor that all functional units need to be arranged in strict accordance with the above order.

In an optional implementation, in a case that the basic communication procedure includes reference signal reception, the basic communication procedure includes at least one of the following series-connected functional units:

obtaining of control information, radio frequency unit, channel estimation or equalization, and information extraction.

In implementation, an arrangement order of the functional units in the basic communication procedure for reference signal reception can be: obtaining of control information -> radio frequency -> resource mapping -> channel estimation or equalization -> information extraction.

Certainly, similar to the basic communication procedure for control channel reception, the arrangement order and the number of functional units in the basic communication procedure for reference signal reception may change according to the actual application scenario, different capabilities or states of the terminal and/or network-side device executing the basic communication procedure, and the like. It is not limited that the basic communication procedure for reference signal reception needs to include all the functional units mentioned above, nor that all functional units need to be arranged in strict accordance with the above order.

In an optional implementation, in a case that the basic communication procedure includes reference signal transmission, the basic communication procedure includes at least one of the following series-connected functional units:

obtaining of control information, obtaining/generating of a reference signal sequence, generation of resource mapping, domain transforming, and radio frequency unit.

In implementation, an arrangement order of the functional units in the basic communication procedure for reference signal transmission can be: obtaining of control information -> obtaining/generating of a reference signal sequence -> generation of resource mapping -> domain transforming and radio frequency.

Certainly, similar to the basic communication procedure for control channel reception, the arrangement order and the number of functional units in the basic communication procedure for reference signal transmission may change according to the actual application scenario, different capabilities or states of the terminal and/or network-side device executing the basic communication procedure, and the like. It is not limited that the basic communication procedure for reference signal transmission needs to include all the functional units mentioned above, nor that all functional units need to be arranged in strict accordance with the above order.

In an optional implementation, in a case that the basic communication procedure includes event management, the basic communication procedure includes at least one of the following series-connected functional units:

obtaining of control information, observation of a target event, and execution of a corresponding behavior; where

the functional unit for observation of a target event is used for determining whether the target event is triggered; and the functional unit for execution of a corresponding behavior is used for executing a behavior corresponding to the target event in a case that triggering of the target event is determined; and the target event includes at least one of the following: event of a wireless environment change, event of an application layer service change, and event of a resource/capability change of the first communication device.

In implementation, the arrangement order of functional units in the basic communication procedure for event management can be: obtaining of control information -> observation of a target event -> execution of a corresponding behavior.

Certainly, similar to the basic communication procedure for control channel reception, the arrangement order and the number of functional units in the basic communication procedure for event management may change according to the actual application scenario, different capabilities or states of the terminal and/or network-side device executing the basic communication procedure, and the like. It is not limited that the basic communication procedure for event management needs to include all the functional units mentioned above, nor that all functional units need to be arranged in strict accordance with the above order.

In this implementation, the first communication device may be a terminal, for example, during moving, the mobile terminal observes changes in communication quality, radio resources, terminal capabilities, and the like.

In this embodiment of this application, the communication procedure of the communication system is divided into a plurality of basic communication procedures, and each basic procedure may include one functional unit or at least two series-connected functional units, and each functional unit has its own corresponding AI model module, so that an AI architecture that can satisfy each basic communication procedure can be implemented based on configuration of related information of input/output reference points of the AI model module. That is, a definition method for the communication procedure based on reference points is given, and a set of interaction methods suitable for AI is proposed from the perspective of AI, which can improve the efficiency of AI information exchange in the communication system and thus improve the system performance.

For the communication model configuration method provided in the embodiments of this application, the execution subject can be a communication model configuration apparatus. In the embodiments of this application, the communication model configuration method being performed by the communication model configuration apparatus is used as an example to describe the communication model configuration apparatus provided in the embodiments of this application.

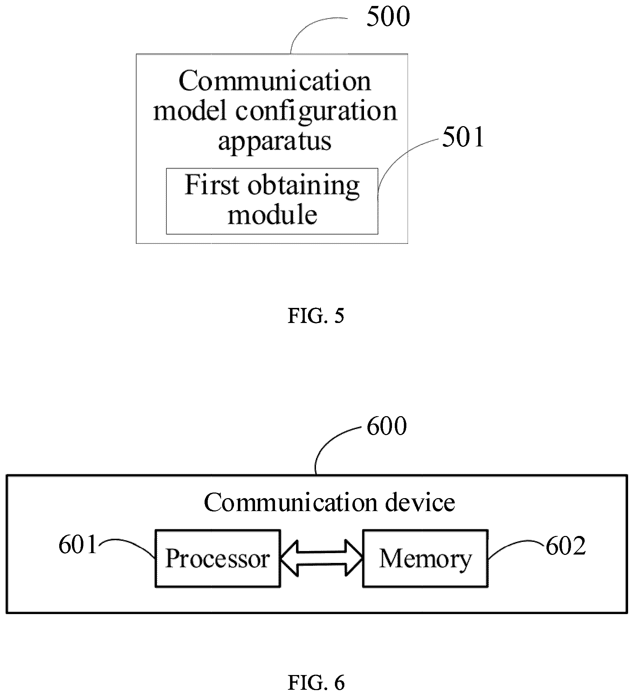

Referring to FIG. 5, an embodiment of this application provides a communication model configuration apparatus, which can be applied to a first communication device. The first communication device may be a network-side device 12 or a terminal 11 in the wireless communication system shown in FIG. 1, which is not specifically limited herein. As shown in FIG. 5, the communication model configuration apparatus 500 may include the following module:

a first obtaining module 501, configured to obtain artificial intelligence AI model configuration information; where

the AI model configuration information includes at least one of the following:

first information, where the first information is used to indicate a basic communication procedure, and the basic communication procedure includes one functional unit or at least two series-connected functional units;

second information, where the second information is used to indicate a functional unit in the basic communication procedure;

third information, where the third information is used to indicate an AI model module, and an AI model in the AI model module is used for executing a function of a corresponding functional unit; and

fourth information, where the fourth information is used to indicate an input reference point and an output reference point of the AI model module.

Optionally, a type of the basic communication procedure includes at least one of the following: physical layer communication procedure, medium access control MAC layer communication procedure, and higher layer communication procedure.

Optionally, the physical layer communication procedure may include at least one of the following: control channel reception, initial access, random access, shared channel reception, control channel transmission, data channel transmission, reference signal reception, and reference signal transmission.

Optionally, a correspondence between the AI model module and the functional unit includes at least one of the following:

one AI model module corresponds to at least one functional unit; and
one functional unit corresponds to at least one AI model module.

Optionally, the functional unit includes at least one of the following:
coding, interleaving, modulation, resource mapping, multi-antenna precoding, fast Fourier transform FFT/inverse fast Fourier transform IFFT, domain transforming, channel estimation, and signal estimation and equalization.

Optionally, the communication model configuration apparatus 500 may include:
an update module, configured to receive update signaling and update third information of a first AI model module in the AI model configuration information according to the update signaling, where the update signaling carries at least one of the following information:

first sub-information, where the first sub-information is used to indicate model reconfiguration information of the first AI model module;

second sub-information, where the second sub-information is used to indicate a first input reference point and a first output reference point of the first AI model module; and

third sub-information, where the third sub-information is used to indicate performing data processing on the first input reference point so as to obtain neural network information of the first output reference point.

Optionally, the communication model configuration apparatus 500 may include:

> a second obtaining module, configured to obtain communication requirement information;
> a determining module, configured to determine, based on target information, a target AI model matching the communication requirement information, where the target information includes the AI model configuration information; and
> an execution module, configured to: based on the target AI model, a target communication procedure corresponding to the communication requirement information or executing a function of a target functional unit corresponding to the communication requirement information.

Optionally, the communication model configuration apparatus 500 may include:
a third obtaining module, configured to obtain first configuration information of the target AI model, where the target information further includes the first configuration information, and the first configuration information includes at least one of the following:

> at least one of a structure, a parameter, and a coefficient of the AI model;
> reference point information;
> functional unit information; and
> AI model module information; where
> the reference point information, the functional unit information, and the AI model module information are related.

Optionally, the reference point information includes at least one of the following information:

> reference point identifier;
> topological relationship of reference points;
> data format corresponding to a position of a reference point in a communication procedure;
> physical meaning of information corresponding to the position of the reference point in the communication procedure; and
> information of an AI model module connected to the reference point.

Optionally, the reference point includes at least one of the following:

> first-type reference point, where the first-type reference point includes protocol-predefined or pre-configured reference points; and
> second-type reference point, where the second-type reference point includes newly added reference points.

Optionally, reference point information of the first-type reference point at least includes a first-type reference point identifier.

Optionally, reference point information of the second-type reference point at least includes:

> a second-type reference point identifier; and
> a topological relationship of reference points.

Optionally, in a case that the basic communication procedure includes control channel reception, the basic communication procedure includes at least one of the following series-connected functional units:
radio frequency, domain transforming, resource mapping, demodulation/decoding, obtaining of control information, and determining of a behavior indicated by the control information, or determining of a physical layer procedure triggered by the control information.

Optionally, the control information includes at least two pieces of sub-information, and each piece of sub-information is used to indicate respective information/signaling, or all the sub-information in the control information constitutes an information group/signaling group; and/or
information/signaling in the control information is used to represent feedback information or first indication information of a triggered physical layer procedure, and the first indication information is used to indicate at least one of the following: target behavior, resource configuration of the target behavior, hyper-parameter of the target behavior, updating of the AI model configuration information, and updating of a hyper-parameter in the AI model configuration information.

Optionally, in a case that the basic communication procedure includes initial access, the basic communication procedure includes at least one of the following series-connected functional units:
radio frequency, synchronous channel search/detection, physical broadcast channel PBCH reception, system information reception, and random access.

Optionally, in a case that the basic communication procedure includes random access, the basic communication procedure includes at least one of the following series-connected functional units:
obtaining of random access preamble, obtaining of random access feedback, scheduled transmission, and contention resolution.

Optionally, in a case that the basic communication procedure includes positioning, the basic communication procedure includes at least one of the following series-connected functional units:

> positioning reference signal reception, signal processing or signal estimation, obtaining/generating of positioning related information, positioning related information transmission or positioning reference signal reception, signal processing or signal estimation, obtaining of positioning intermediate information, obtaining of position information, and position information transmission; or positioning reference signal reception, signal processing or signal estimation, obtaining/generating of positioning related information, obtaining of position information, and position information transmission.

Optionally, in a case that the basic communication procedure includes shared channel reception, the basic communication procedure includes at least one of the following series-connected functional units: obtaining of control information, radio frequency unit, channel estimation or equalization, domain transforming, resource mapping, and demodulation or decoding.

Optionally, in a case that the basic communication procedure includes control channel transmission, the basic communication procedure includes at least one of the following series-connected functional units: obtaining of signaling, coding or interleaving or modulation, resource mapping, domain transforming, and radio frequency unit.

Optionally, in a case that the basic communication procedure includes data channel transmission, the basic communication procedure includes at least one of the following series-connected functional units: obtaining of data, coding or interleaving or modulation, resource mapping, domain transforming, and radio frequency unit.

Optionally, in a case that the basic communication procedure includes reference signal reception, the basic communication procedure includes at least one of the following series-connected functional units: obtaining of control information, radio frequency unit, channel estimation or equalization, and information extraction.

Optionally, in a case that the basic communication procedure includes reference signal transmission, the basic communication procedure includes at least one of the following series-connected functional units: obtaining of control information, obtaining/generating of a reference signal sequence, generation of resource mapping, domain transforming, and radio frequency unit.

Optionally, in a case that the basic communication procedure includes event management, the basic communication procedure includes at least one of the following series-connected functional units:

obtaining of control information, observation of a target event, and execution of a corresponding behavior; where the functional unit for observation of a target event is used for determining whether the target event is triggered; and the functional unit for execution of a corresponding behavior is used for executing a behavior corresponding to the target event in a case that triggering of the target event is determined; and the target event includes at least one of the following: event of a wireless environment change, event of an application layer service change, and event of a resource/capability change of the first communication device.

The communication model configuration apparatus 500 provided in this embodiment of this application can perform the processes executed by the first communication device in the method embodiment shown in FIG. 2, with the same beneficial effects achieved. To avoid repetition, details are not repeated herein.

The communication model configuration apparatus 500 in this embodiment of this application may be an electronic device, such as an electronic device with an operating system, or a component in the electronic device, such as an integrated circuit or a chip. The electronic device may be a terminal or other devices than the terminal. For example, the terminal may include, but is not limited to, the types of the terminal 11 listed above, and other devices may be a server, a network attached storage (Network Attached Storage, NAS), and the like. This is not limited in the embodiments of this application.

The communication model configuration apparatus provided in this embodiment of this application is capable of implementing the processes implemented in the method embodiments in FIG. 2, with the same technical effects achieved. To avoid repetition, details are not described herein again.

Optionally, as shown in FIG. 6, an embodiment of this application further provides a communication device 600, including a processor 601, a memory 602, and a program or instructions stored in the memory 602 and capable of running on the processor 601. For example, when the communication device 600 is a terminal and when the program or the instructions are executed by the processor 601, the steps of the foregoing embodiments of the communication model configuration method are implemented, with the same technical effects achieved. Certainly, when the communication device 600 is a network-side device and when the program or the instructions are executed by the processor 601, the steps of the foregoing embodiments of the communication model configuration method are implemented, with the same technical effects achieved. To avoid repetition, details are not described herein again.

An embodiment of this application further provides a terminal, including a processor and a communication interface, where the communication interface is configured to obtain artificial intelligence AI model configuration information, where the AI model configuration information includes at least one of the following:

first information, where the first information is used to indicate a basic communication procedure, and the basic communication procedure includes one functional unit or at least two series-connected functional units; second information, where the second information is used to indicate a functional unit in the basic communication procedure;

third information, where the third information is used to indicate an AI model module, and an AI model in the AI model module is used for executing a function of a corresponding functional unit; and

fourth information, where the fourth information is used to indicate an input reference point and an output reference point of the AI model module.

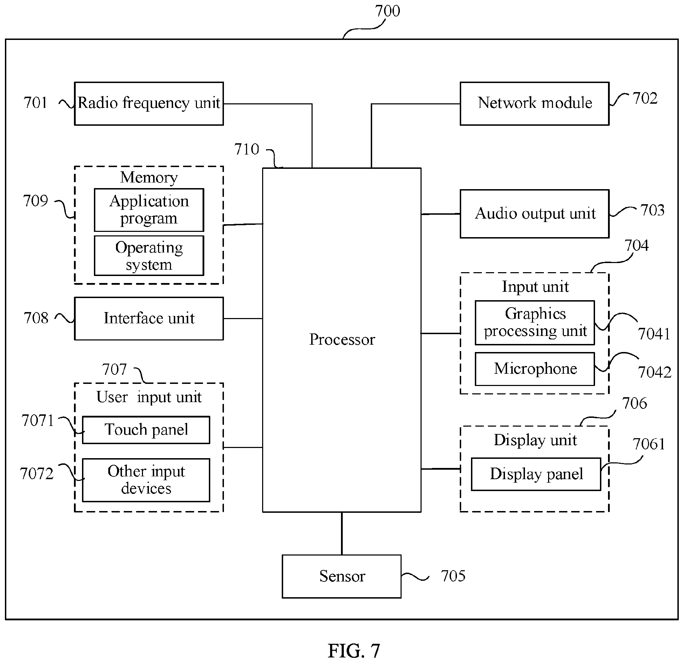

The terminal embodiments correspond to the foregoing terminal-side method embodiments, and the implementation processes and implementations of the foregoing method embodiments can be applied to the terminal embodiments, with the same technical effects achieved. Specifically, FIG. 7 is a schematic diagram of a hardware structure of a terminal for implementing the embodiments of this application.

The terminal 700 includes but is not limited to at least part of components such as a radio frequency unit 701, a network module 702, an audio output unit 703, an input unit 704, a sensor 705, a display unit 706, a user input unit 707, an interface unit 708, a memory 709, and a processor 710.

Persons skilled in the art can understand that the terminal 700 may further include a power supply (for example, a battery) supplying power to the components, and the power supply may be logically connected to the processor 710 through a power management system. In this way, functions such as charge management, discharge management, and power consumption management are implemented by using the power management system. The structure of the terminal shown in FIG. 7 does not constitute any limitation on the terminal. The terminal may include more or fewer components than shown in the figure, or a combination of some components, or the components disposed differently. Details are not described herein again.

It can be understood that in this embodiment of this application, the input unit 704 may include a graphics processing unit (Graphics Processing Unit, GPU) 7041 and a microphone 7042. The graphics processing unit 7041 processes image data of a still picture or video obtained by an image capture apparatus (such as a camera) in a video capture mode or an image capture mode. The display unit 706 may include a display panel 7061, and the display panel 7061 may be configured in a form of a liquid crystal display, an organic light-emitting diode, and the like. The user input unit 707 may include at least one of a touch panel 7071 and other input devices 7072. The touch panel 7071 is also referred to as a touchscreen. The touch panel 7071 may include two parts: a touch detection apparatus and a touch controller. The other input devices 7072 may include but are not limited to a physical keyboard, a function key (such as a volume control key or a power on/off key), a trackball, a mouse, a joystick, and the like. Details are not described herein.

In this embodiment of this application, the radio frequency unit 701 receives downlink data from a network-side device, and then sends the downlink data to the processor 710 for processing. In addition, the radio frequency unit 701 may sends uplink data to the network-side device. Generally, the radio frequency unit 701 includes but is not limited to an antenna, an amplifier, a transceiver, a coupler, a low noise amplifier, a duplexer, and the like.

The memory 709 may be configured to store software programs or instructions and various data. The memory 709 may include a first storage area for storing a program or instructions and a second storage area for storing data. The first storage area may store an operating system, an application program or instruction required by at least one function (for example, a sound playback function or an image playback function), and the like. In addition, the memory 709 may include a volatile memory or a non-volatile memory, or the memory 709 may include both a volatile memory and a non-volatile memory. The non-volatile memory may be a read-only memory (Read-Only Memory, ROM), a programmable read only memory (Programmable ROM, PROM), an erasable programmable read-only memory (Erasable PROM, EPROM), and an electrically erasable programmable read-only memory (Electrically EPROM, EEPROM), or flash memory. The volatile memory can be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synch link DRAM, SLDRAM), and a direct rambus random access memory (Direct Rambus RAM, DRRAM). The memory 709 in the embodiments of this application includes but is not limited to these and any other suitable types of memories.

The processor 710 may include one or more processing units. Optionally, an application processor and a modem processor may be integrated in the processor 710. The application processor primarily processes operations involving an operating system, user interfaces, application programs, and the like. The modem processor primarily processes radio communication signals, for example, being a baseband processor. It can be understood that the modem processor may alternatively be not integrated in the processor 710.

The radio frequency unit 701 is configured to obtain artificial intelligence AI model configuration information; where

the AI model configuration information includes at least one of the following:

first information, where the first information is used to indicate a basic communication procedure, and the basic communication procedure includes one functional unit or at least two series-connected functional units;

second information, where the second information is used to indicate a functional unit in the basic communication procedure;

third information, where the third information is used to indicate an AI model module, and an AI model in the AI model module is used for executing a function of a corresponding functional unit; and

fourth information, where the fourth information is used to indicate an input reference point and an output reference point of the AI model module.

Optionally, a type of the basic communication procedure includes at least one of the following: physical layer communication procedure, media access control MAC layer communication procedure, and higher layer communication procedure.

Optionally, the physical layer communication procedure includes at least one of the following: control channel reception, initial access, random access, shared channel reception, control channel transmission, data channel transmission, reference signal reception, and reference signal transmission.

Optionally, a correspondence between the AI model module and the functional unit includes at least one of the following:

one AI model module corresponds to at least one functional unit; and
one functional unit corresponds to at least one AI model module.

Optionally, the functional unit includes at least one of the following:
coding, interleaving, modulation, resource mapping, multi-antenna precoding, fast Fourier transform FFT/inverse fast Fourier transform IFFT, domain transforming, channel estimation, and signal estimation and equalization.

Optionally, the radio frequency unit 701 is further configured to receive update signaling.

The processor 710 is configured to update third information of a first AI model module in the AI model configuration information according to the update signaling, where the update signaling carries at least one of the following information:

first sub-information, where the first sub-information is used to indicate model reconfiguration information of the first AI model module;

second sub-information, where the second sub-information is used to indicate a first input reference point and a first output reference point of the first AI model module; and

third sub-information, where the third sub-information is used to indicate performing data processing on the first input reference point so as to obtain neural network information of the first output reference point.

Optionally, the radio frequency unit 701 is further configured to obtain communication requirement information after execution of obtaining the artificial intelligence AI model configuration information.

The processor 710 is further configured to determine, based on target information, a target AI model matching the communication requirement information, where the target information includes the AI model configuration information; and

the processor 710 is further configured to: based on the target AI model, a target communication procedure corresponding to the communication requirement information or executing a function of a target functional unit corresponding to the communication requirement information.

Optionally, the radio frequency unit 701 is further configured to obtain first configuration information of the target AI model, where the target information further includes the first configuration information, and the first configuration information includes at least one of the following:

at least one of a structure, a parameter, and a coefficient of the AI model;
reference point information;
functional unit information; and
AI model module information; where
the reference point information, the functional unit information, and the AI model module information are related.

Optionally, the reference point information includes at least one of the following information:

reference point identifier;
topological relationship of reference points;
data format corresponding to a position of a reference point in a communication procedure;
physical meaning of information corresponding to the position of the reference point in the communication procedure; and
information of an AI model module connected to the reference point.

Optionally, the reference point includes at least one of the following:

first-type reference point, where the first-type reference point includes protocol-predefined or pre-configured reference points; and
second-type reference point, where the first-type reference point includes newly added reference points.

Optionally, reference point information of the first-type reference point at least includes a first-type reference point identifier.

Optionally, reference point information of the second-type reference point at least includes:

a second-type reference point identifier; and
a topological relationship of reference points.

Optionally, in a case that the basic communication procedure includes control channel reception, the basic communication procedure includes at least one of the following series-connected functional units:
radio frequency, domain transforming, resource mapping, demodulation/decoding, obtaining of control information, and determining of a behavior indicated by the control information, or determining of a physical layer procedure triggered by the control information.

Optionally, the control information includes at least two pieces of sub-information, and each piece of sub-information is used to indicate respective information/signaling, or all the sub-information in the control information constitutes an information group/signaling group; and/or
information/signaling in the control information is used to represent feedback information or first indication information of a triggered physical layer procedure, and the first indication information is used to indicate at least one of the following: target behavior, resource configuration of the target behavior, hyper-parameter of the target behavior, updating of the AI model configuration information, and updating of a hyper-parameter in the AI model configuration information.

Optionally, in a case that the basic communication procedure includes initial access, the basic communication procedure includes at least one of the following series-connected functional units:
radio frequency, synchronous channel search/detection, physical broadcast channel PBCH reception, system information reception, and random access.

Optionally, in a case that the basic communication procedure includes control random access, the basic communication procedure includes at least one of the following series-connected functional units:
obtaining of random access preamble, obtaining of random access feedback, scheduled transmission, and contention resolution.

Optionally, in a case that the basic communication procedure includes positioning, the basic communication procedure includes at least one of the following series-connected functional units:

positioning reference signal reception, signal processing or signal estimation, obtaining/generating of positioning related information, positioning related information transmission or positioning reference signal reception, signal processing or signal estimation, obtaining of positioning intermediate information, obtaining of position information, and position information transmission; or
positioning reference signal reception, signal processing or signal estimation, obtaining/generating of positioning related information, obtaining of position information, and position information transmission.

Optionally, in a case that the basic communication procedure includes shared channel reception, the basic communication procedure includes at least one of the following series-connected functional units:
obtaining of control information, radio frequency unit, channel estimation or equalization, domain transforming, resource mapping, and demodulation or decoding.

Optionally, in a case that the basic communication procedure includes control channel transmission, the basic communication procedure includes at least one of the following series-connected functional units:
obtaining of signaling, coding or interleaving or modulation, resource mapping, domain transforming, and radio frequency unit.

Optionally, in a case that the basic communication procedure includes data channel transmission, the basic communication procedure includes at least one of the following series-connected functional units:
obtaining of data, coding or interleaving or modulation, resource mapping, domain transforming, and radio frequency unit.

Optionally, in a case that the basic communication procedure includes reference signal reception, the basic communication procedure includes at least one of the following series-connected functional units:
obtaining of control information, radio frequency unit, channel estimation or equalization, and information extraction.

Optionally, in a case that the basic communication procedure includes reference signal transmission, the basic communication procedure includes at least one of the following series-connected functional units:
obtaining of control information, obtaining/generating of a reference signal sequence, generation of resource mapping, domain transforming, and radio frequency unit.

Optionally, in a case that the basic communication procedure includes event management, the basic communication procedure includes at least one of the following series-connected functional units:

obtaining of control information, observation of a target event, and execution of a corresponding behavior; where
the functional unit for observation of a target event is used for determining whether the target event is triggered; and the functional unit for execution of a corresponding behavior is used for executing a behavior corresponding to the target event in a case that triggering of the target event is determined; and the target event includes at least one of the following: event of a wireless environment change, event of an application layer service change, and event of a resource/capability change of the first communication device.

The terminal 700 provided in this embodiment of this application can execute the processes executed by models in the embodiment of the communication model configuration apparatus shown in FIG. 5, achieving the same beneficial effects as the embodiment of the device as shown in FIG. 5. To avoid repetition, details are not repeated herein.

An embodiment of this application further provides a network-side device, including a processor and a communication interface, where the communication interface is configured to obtain artificial intelligence AI model configuration information, where the AI model configuration information includes at least one of the following:

first information, where the first information is used to indicate a basic communication procedure, and the basic communication procedure includes one functional unit or at least two series-connected functional units;
second information, where the second information is used to indicate a functional unit in the basic communication procedure;
third information, where the third information is used to indicate an AI model module, and an AI model in the AI model module is used for executing a function of a corresponding functional unit; and
fourth information, where the fourth information is used to indicate an input reference point and an output reference point of the AI model module.

The network-side device embodiments correspond to the foregoing communication model configuration method embodiments, and the implementation processes and implementations of the foregoing method embodiments can be applied to the network-side device embodiments, with the same technical effects achieved.

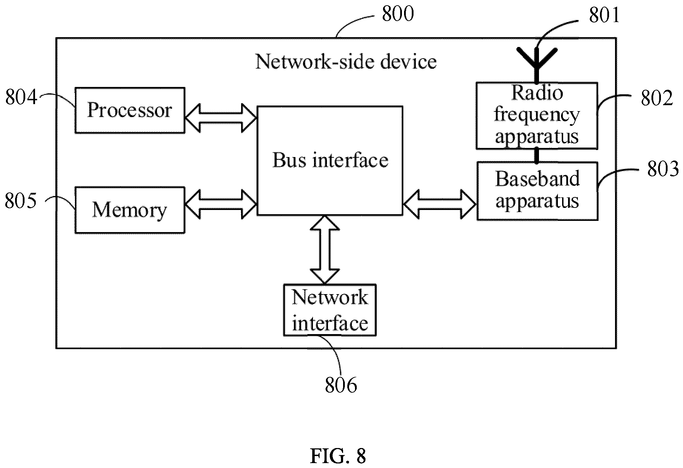

Specifically, an embodiment of this application further provides a network-side device. As shown in FIG. 8, the network-side device 800 includes an antenna 801, a radio frequency apparatus 802, a baseband apparatus 803, a processor 804, and a memory 805. The antenna 801 is connected to the radio frequency apparatus 802. In an uplink direction, the radio frequency apparatus 802 receives information by using the antenna 801, and sends the received information to the baseband apparatus 803 for processing. In a downlink direction, the baseband apparatus 803 processes to-be-sent information, and sends the information to the radio frequency apparatus 802; and the radio frequency apparatus 802 processes the received information and then sends the information out by using the antenna 801.

The method executed by the network-side device in the foregoing embodiments can be implemented in the baseband apparatus 803, and the baseband apparatus 803 includes a baseband processor.

The baseband apparatus 803 may include, for example, at least one baseband board, where a plurality of chips are disposed on the baseband board. As shown in FIG. 8, one of the chips is, for example, a baseband processor, and is connected to the memory 805 through the bus interface, to invoke a program in the memory 805 to perform the operations of the network device shown in the foregoing method embodiments.

The network-side device may further include a network interface 806, where the interface is, for example, a common public radio interface (common public radio interface, CPRI).

Specifically, the network-side device 800 in this embodiment of the present invention further includes: instructions or a program stored in the memory 805 and capable of running on the processor 804. The processor 804 invokes the instructions or program in the memory 805 to execute the method executed by the modules shown in FIG. 5, with the same technical effects achieved. To avoid repetition, details are not repeated herein.

An embodiment of this application further provides a readable storage medium, where a program or an instruction is stored in the readable storage medium. When the program or the instruction is executed by a processor, the processes of the foregoing communication model configuration method embodiments are implemented, with the same technical effects achieved. To avoid repetition, details are not described herein again.

The processor is a processor in the terminal described in the foregoing embodiments. The readable storage medium includes a computer-readable storage medium, for example, a computer read only memory ROM, a random access memory RAM, a magnetic disk, or an optical disc.

An embodiment of this application further provides a chip, where the chip includes a processor and a communication interface. The communication interface is coupled to the processor, and the processor is configured to run a program or an instruction to implement the processes of the foregoing embodiments of the communication model configuration method, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program/program product, where the computer program/program product is stored in a storage medium, and when being executed by at least one processor, the computer program/program product is configured to implement the processes of the foregoing communication model configuration method embodiments, with the same technical effects achieved. To avoid repetition, details are not repeated herein.

An embodiment of the application further provides a communication system, including a terminal and a network-side device, where the terminal and the network-side device can each be used for executing the steps of the communication model configuration method.

It should be noted that in this specification, the term "include", "comprise", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the embodiments of this application is not limited to executing the functions in an order shown or discussed, but may also include executing the functions in a substantially simultaneous manner or in a reverse order, depending on the functions involved. For example, the described methods may be performed in an order different from that described, and steps may alternatively be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, a network device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

**Claims**

1. A communication model configuration method, comprising:

   obtaining, by a first communication device, artificial intelligence AI model configuration information; wherein
   the AI model configuration information comprises at least one of the following:

      first information, wherein the first information is used to indicate a basic communication procedure, and the basic communication procedure comprises one functional unit or at least two series-connected functional units;
      second information, wherein the second information is used to indicate a functional unit in the basic communication procedure;
      third information, wherein the third information is used to indicate an AI model module, and an AI model in the AI model module is used for executing a function of a corresponding functional unit; and
      fourth information, wherein the fourth information is used to indicate an input reference point and an output reference point of the AI model module.

2. The method according to claim 1, wherein a type of the basic communication procedure comprises at least one of the following: physical layer communication procedure, media access control MAC layer communication procedure, and higher layer communication procedure.

3. The method according to claim 2, wherein the physical layer communication procedure comprises at least one of the following:
   control channel reception, initial access, random access, shared channel reception, control channel transmission, data channel transmission, reference signal reception, and reference signal transmission.

4. The method according to claim 1, wherein a correspondence between the AI model module and the functional unit comprises at least one of the following:

      one AI model module corresponds to at least one functional unit; and
      one functional unit corresponds to at least one AI model module.

5. The method according to any one of claims 1 to 4, wherein the functional unit comprises at least one of the following:

coding, interleaving, modulation, resource mapping, multi-antenna precoding, fast Fourier transform FFT/inverse fast Fourier transform IFFT, domain transforming, channel estimation, and signal estimation and equalization.

6. The method according to any one of claims 1 to 4, wherein the method further comprises:
receiving, by the first communication device, update signaling and updating third information of a first AI model module in the AI model configuration information according to the update signaling, wherein the update signaling carries at least one of the following information:

first sub-information, wherein the first sub-information is used to indicate model reconfiguration information of the first AI model module;
second sub-information, wherein the second sub-information is used to indicate a first input reference point and a first output reference point of the first AI model module; and
third sub-information, wherein the third sub-information is used to indicate performing data processing on the first input reference point so as to obtain neural network information of the first output reference point.

7. The method according to claim 1, wherein after the obtaining, by a first communication device, artificial intelligence AI model configuration information, the method further comprises:

obtaining, by the first communication device, communication requirement information;
determining, by the first communication device based on target information, a target AI model matching the communication requirement information, wherein the target information comprises the AI model configuration information; and
executing, by the first communication device based on the target AI model, a target communication procedure corresponding to the communication requirement information or executing a function of a target functional unit corresponding to the communication requirement information.

8. The method according to claim 7, wherein the method further comprises:
obtaining, by the first communication device, first configuration information of the target AI model, wherein the target information further comprises the first configuration information, and the first configuration information comprises at least one of the following:

at least one of a structure, a parameter, and a coefficient of the AI model;
reference point information;
functional unit information; and
AI model module information; wherein
the reference point information, the functional unit information, and the AI model module information are related.

9. The method according to claim 8, wherein the reference point information comprises at least one of the following information:

reference point identifier;
topological relationship of reference points;
data format corresponding to a position of a reference point in a communication procedure;
physical meaning of information corresponding to the position of the reference point in the communication procedure; and
information of an AI model module connected to the reference point.

10. The method according to claim 9, wherein the reference point comprises at least one of the following:

first-type reference point, wherein the first-type reference point comprises protocol-predefined or pre-configured reference points; and
second-type reference point, wherein the second-type reference point comprises newly added reference points.

11. The method according to claim 10, wherein reference point information of the first-type reference point at least comprises a first-type reference point identifier.

12. The method according to claim 10, wherein reference point information of the second-type reference point at least comprises:

a second-type reference point identifier; and
a topological relationship of reference points.

13. The method according to claim 3, wherein in a case that the basic communication procedure comprises control channel reception, the basic communication procedure comprises at least one of the following series-connected functional units:
radio frequency, domain transforming, resource mapping, demodulation/decoding, obtaining of control information, and determining of a behavior indicated by the control information, or determining of a physical layer procedure triggered by the control information.

14. The method according to claim 13, wherein the control information comprises at least two pieces of sub-information, and each piece of sub-information is used to indicate respective information/signaling, or all the sub-information in the control information constitutes an information group/signaling group; and/or information/signaling in the control information is used to represent feedback information or first indication information of a triggered physical layer procedure, and the first indication information is used to indicate at least one of the following: target behavior, resource configuration of the target behavior, hyper-parameter of the target behavior, updating of the AI model configuration information, and updating of a hyper-parameter in the AI model configuration information.

15. The method according to claim 3, wherein in a case that the basic communication procedure comprises initial access, the basic communication procedure comprises at least one of the following series-connected functional units:
radio frequency, synchronous channel search/detection, physical broadcast channel PBCH reception, system information reception, and random access.

16. The method according to claim 3, wherein in a case that the basic communication procedure comprises random access, the basic communication procedure comprises at least one of the following series-connected functional units:
obtaining of random access preamble, obtaining of random access feedback, scheduled transmission, and contention resolution.

17. The method according to claim 3, wherein in a case that the basic communication procedure comprises positioning, the basic communication procedure comprises at least one of the following series-connected functional units:

positioning reference signal reception, signal processing or signal estimation, obtaining/generating of positioning related information, positioning related information transmission or positioning reference signal reception, signal processing or signal estimation, obtaining of positioning intermediate information, obtaining of position information, and position information transmission; or
positioning reference signal reception, signal processing or signal estimation, obtaining/generating of positioning related information, obtaining of position information, and position information transmission.

18. The method according to claim 3, wherein in a case that the basic communication procedure comprises shared channel reception, the basic communication procedure comprises at least one of the following series-connected functional units:
obtaining of control information, radio frequency unit, channel estimation or equalization, domain transforming, resource mapping, and demodulation or decoding.

19. The method according to claim 3, wherein in a case that the basic communication procedure comprises control channel transmission, the basic communication procedure comprises at least one of the following series-connected functional units:
obtaining of signaling, coding or interleaving or modulation, resource mapping, domain transforming, and radio frequency unit.

20. The method according to claim 3, wherein in a case that the basic communication procedure comprises data channel transmission, the basic communication procedure comprises at least one of the following series-connected functional units:
obtaining of data, coding or interleaving or modulation, resource mapping, domain transforming, and radio frequency unit.

21. The method according to claim 3, wherein in a case that the basic communication procedure comprises reference signal reception, the basic communication procedure comprises at least one of the following series-connected functional units:
obtaining of control information, radio frequency unit, channel estimation or equalization, and information extraction.

22. The method according to claim 3, wherein in a case that the basic communication procedure comprises reference signal transmission, the basic communication procedure comprises at least one of the following series-connected functional units:
obtaining of control information, obtaining/generating of a reference signal sequence, generation of resource mapping, domain transforming, and radio frequency unit.

23. The method according to claim 3, wherein in a case that the basic communication procedure comprises event management, the basic communication procedure comprises at least one of the following series-connected functional units:

obtaining of control information, observation of a target event, and execution of a corresponding behavior; wherein
the functional unit for observation of a target event is used for determining whether the target event is triggered; and the functional unit for execution of a corresponding behavior is used for executing a behavior corresponding to the target event in a case that triggering of the target event is determined; and

the target event comprises at least one of the following:

event of a wireless environment change, event of an application layer service change, and event of a resource/capability change of the first communication device.

24. A communication model configuration apparatus, applied to a first communication device, wherein the apparatus comprises:

a first obtaining module, configured to obtain artificial intelligence AI model configuration information; wherein

the AI model configuration information comprises at least one of the following:

first information, wherein the first information is used to indicate a basic communication procedure, and the basic communication procedure comprises one functional unit or at least two series-connected functional units;

second information, wherein the second information is used to indicate a functional unit in the basic communication procedure;

third information, wherein the third information is used to indicate an AI model module, and an AI model in the AI model module is used for executing a function of a corresponding functional unit; and

fourth information, wherein the fourth information is used to indicate an input reference point and an output reference point of the AI model module.

25. The apparatus according to claim 24, wherein a type of the basic communication procedure comprises at least one of the following: physical layer communication procedure, media access control MAC layer communication procedure, and higher layer communication procedure.

26. The apparatus according to claim 25, wherein the physical layer communication procedure comprises at least one of the following:

control channel reception, initial access, random access, shared channel reception, control channel transmission, data channel transmission, reference signal reception, and reference signal transmission.

27. The apparatus according to any one of claims 24 to 26, wherein the functional unit comprises at least one of the following:

coding, interleaving, modulation, resource mapping, multi-antenna precoding, fast Fourier transform FFT/inverse fast Fourier transform IFFT, domain transforming, channel estimation, and signal estimation and equalization.

28. The apparatus according to any one of claims 24 to 26, further comprising:

an update module, configured to receive update signaling and update third information of a first AI model module in the AI model configuration information according to the update signaling, wherein the update signaling carries at least one of the following information:

first sub-information, wherein the first sub-information is used to indicate model reconfiguration information of the first AI model module;

second sub-information, wherein the second sub-information is used to indicate a first input reference point and a first output reference point of the first AI model module; and

third sub-information, wherein the third sub-information is used to indicate performing data processing on the first input reference point so as to obtain neural network information of the first output reference point.

29. The apparatus according to claim 24, further comprising:

a second obtaining module, configured to obtain communication requirement information;

a determining module, configured to determine, based on target information, a target AI model matching the communication requirement information, wherein the target information comprises the AI model configuration information; and

an execution module, configured to: based on the target AI model, a target communication procedure corresponding to the communication requirement information or executing a function of a target functional unit corresponding to the communication requirement information.

30. The apparatus according to claim 29, further comprising:

a third obtaining module, configured to obtain first configuration information of the target AI model, wherein the target information further comprises the first configuration information, and the first configuration information comprises at least one of the following:

at least one of a structure, a parameter, and a coefficient of the AI model;

reference point information;

functional unit information; and

AI model module information; wherein

the reference point information, the functional unit information, and the AI model module information are related.

31. The apparatus according to claim 30, wherein the reference point information comprises at least one of the following information:

reference point identifier;
topological relationship of reference points;
data format corresponding to a position of a reference point in a communication procedure;
physical meaning of information corresponding to the position of the reference point in the communication procedure; and
information of an AI model module connected.

32. A communication device, comprising a processor, a memory, and a program or instructions stored in the memory and capable of running on the processor, wherein when the program or the instructions are executed by the processor, the steps of the communication model configuration method according to any one of claims 1 to 24 are implemented.

33. A readable storage medium, wherein the readable storage medium stores a program or instructions, and when the program or the instructions are executed by a processor, the steps of the communication model configuration method according to any one of claims 1 to 24 are implemented.

Network-side device

11

11

Terminal

Terminal

FIG. 1

A first communication device obtains AI model configuration information

201

FIG. 2

Input layer   Hidden layer   Output layer

$X_1$

$X_2$

$X_n$

Y

FIG. 3

$a_1$

$w_1$

$a_k$

$w_k$

$w_K$

$a_K$   Weight

$+$   $z$   $\sigma(z)$   $a$

$b$   Bias

Activation
function

FIG. 4

500

Communication
model configuration
apparatus

501

First obtaining
module

FIG. 5

600

Communication device

601

Processor ⟺ Memory

602

FIG. 6

FIG. 7

FIG. 8

**INTERNATIONAL SEARCH REPORT**

International application No.

**PCT/CN2022/144012**

**A. CLASSIFICATION OF SUBJECT MATTER**

H04W24/02(2009.01)i

According to International Patent Classification (IPC) or to both national classification and IPC

**B. FIELDS SEARCHED**

Minimum documentation searched (classification system followed by classification symbols)

IPC: H04W H04L G06F

Documentation searched other than minimum documentation to the extent that such documents are included in the fields searched

Electronic data base consulted during the international search (name of data base and, where practicable, search terms used)

CNPAT, CNKI, WPI, EPODOC: 模型 配置 人工智能 功能 指示 通信 过程 流程 输入 输出 model configuration AI function indicate communication process method input output

**C. DOCUMENTS CONSIDERED TO BE RELEVANT**

| Category* | Citation of document, with indication, where appropriate, of the relevant passages | Relevant to claim No. |
|---|---|---|
| X | CN 113570030 A (TENCENT TECHNOLOGY (SHENZHEN) CO., LTD.) 29 October 2021 (2021-10-29)<br>description, paragraphs 2-203 | 1-33 |
| X | EP 3273372 A1 (SIEMENS AKTIENGESELLSCHAFT) 24 January 2018 (2018-01-24)<br>description, paragraphs 62-139 | 1-33 |
| A | CN 111222046 A (TENCENT TECHNOLOGY (SHENZHEN) CO., LTD.) 02 June 2020 (2020-06-02)<br>entire document | 1-33 |
| A | CN 113225197 A (NTT DOCOMO INC.) 06 August 2021 (2021-08-06)<br>entire document | 1-33 |
| A | WO 2021142836 A1 (GUANGDONG OPPO MOBILE COMMUNICATIONS CO., LTD.) 22 July 2021 (2021-07-22)<br>entire document | 1-33 |

☐ Further documents are listed in the continuation of Box C.   ☑ See patent family annex.

| | |
|---|---|
| *    Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **(20230303)** | **15 March 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

INTERNATIONAL SEARCH REPORT
Information on patent family members

International application No.

**PCT/CN2022/144012**

| Patent document cited in search report | | | Publication date (day/month/year) | Patent family member(s) | | | Publication date (day/month/year) |
|---|---|---|---|---|---|---|---|
| CN | 113570030 | A | 29 October 2021 | None | | | |
| EP | 3273372 | A1 | 24 January 2018 | US | 2018024511 | A1 | 25 January 2018 |
| | | | | CN | 107643731 | A | 30 January 2018 |
| CN | 111222046 | A | 02 June 2020 | HK | 40025260 | A0 | 24 December 2020 |
| CN | 113225197 | A | 06 August 2021 | WO | 2021147469 | A1 | 29 July 2021 |
| | | | | CN | 115004649 | A | 02 September 2022 |
| WO | 2021142836 | A1 | 22 July 2021 | EP | 4092918 | A1 | 23 November 2022 |
| | | | | US | 2022352952 | A1 | 03 November 2022 |
| | | | | CN | 115280682 | A | 01 November 2021 |

Form PCT/ISA/210 (patent family annex) (July 2022)

**REFERENCES CITED IN THE DESCRIPTION**

**Patent documents cited in the description**

- CN 202111659285